# EUROPÄISCHE PATENTSCHRIFT

(11) **EP 3 635 858 B1**
(45) Veröffentlichungstag und Bekanntmachung des Hinweises auf die Patenterteilung: **30.09.2026**
(21) Anmeldenummer: 18730703.8
(22) Anmeldetag: 05.06.2018
(51) Int. Cl.: H02S 30/00, F24S 30/45, H02S 20/32, H02S 40/36, F24S 25/12, F24S 25/13, F24S 25/60, F24S 30/425

(54) **PHOTOVOLTAIKVORRICHTUNG FÜR CONTAINER**
PHOTOVOLTAIC DEVICE FOR CONTAINERS
DISPOSITIF PHOTOVOLTAÏQUE POUR CONTENEUR

(30) Priorität: 08.06.2017 DE 102017112608
(43) Veröffentlichungstag der Anmeldung: 15.04.2020
(73) Patentinhaber: Innogy SE, 45128 Essen (DE)
(72) Erfinder: JÖRISSEN, Christoph, 42579 Heiligenhaus (DE)
(74) Vertreter: Cohausz & Florack
(86) Internationale Anmeldenummer: PCT/EP2018/064746
(87) Internationale Veröffentlichungsnummer: WO 2018/224486

(56) Entgegenhaltungen:
- WO-A1-2007/087755
- WO-A1-2015/115362
- WO-A1-2015/164913
- CN-B- 102 340 264
- GB-A- 2 463 098
- JP-A- 2012 001 152
- KR-A- 20120 014 820
- US-A1- 2013 056 991
- US-A1- 2015 013 750
- US-B1- 8 839 574
- US-B2- 7 202 457

## Beschreibung

Die Anmeldung betrifft eine Photovoltaikvorrichtung für Container, ein Photovoltaiksystem und eine Verwendung einer Photovoltaikvorrichtung.

Verschiedenste Güter werden heutzutage mit Hilfe von Containern transportiert. Insbesondere werden für ein einfaches und schnelles Verladen, Befördern, Lagern und/oder Entladen der Güter sogenannte ISO-Container eingesetzt. Derartige Container sind insbesondere hinsichtlich ihrer Dimensionen, Formen, Befestigungsbeschlägen, und dergleichen genormt (siehe insbesondere ISO-Norm 668).

Container können mit Fahrzeugen, insbesondere mit Wasserfahrzeugen, wie (Transport-)Schiffen, transportiert und beispielsweise auf Freiflächen zwischengelagert werden.

Die elektrische Energie an Bord von Wasserfahrzeugen wird in der Regel durch herkömmliche Stromgeneratoren (sogenannte Hilfsdieselaggregate) erzeugt, die einen herkömmlichen Brennstoff benötigen. Dies bringt stets eine große Kohlenstoffdioxidemission mit sich.

Insbesondere zur Verbesserung der Umweltbilanz, wie der Kohlenstoffdioxidemission, von Wasserfahrzeugen ist es aus dem Stand der Technik bekannt, für die Stromerzeugung (zumindest ergänzend) flexible Photovoltaikfolien zu verwenden. Beispielsweise ist es bei Segelschiffen bekannt, die Oberflächen der Segel mit diesen Photovoltaikfolien auszustatten. Bei mastlosen Wasserfahrzeugen ist es bekannt, flexible Photovoltaikfolien in Form eines durchgängigen Photovoltaikteppichs zu verwenden. Ein derartiger Photovoltaikteppich kann beispielsweise über die oberste Schicht von Containern nach deren Beladung angeordnet werden kann.

Nachteilig an diesen flexiblen Photovoltaikfoliensystemen ist, neben der immer noch geringeren Leistung gegenüber starren Photovoltaikvorrichtungen, die aufwendige und komplexe Handhabung dieser Teppichelemente. Insbesondere gestaltet sich die Verlegung eines Photovoltaikteppichs über die Container auf einem Wasserfahrzeug schwierig.

Aus der Druckschrift JP 2012 001152 A ist eine Photovoltaikvorrichtung für mindestens einen Container bekannt, umfassend ein rechteckförmiges Rahmengestell, eingerichtet zum Halten von mindestens einem Photovoltaikmodul, wobei das Rahmengestell mindestens eine Eckeinrichtung aufweist, umfassend ein erstes zu einem Befestigungsbeschlag eines Containers korrespondierendes Befestigungsmodul. Die Druckschrift US 8,839,574 B1 offenbart eine Photovoltaikvorrichtung mit einem manuell zu bedienenden Rastmechanismus zur Verstellung der Ausrichtung eines Photovoltaikmoduls der Photovoltaikvorrichtung, wobei hierfür ein Laufsteg vorgesehen, über den ein Nutzer zu dem manuell zu bedienenden Rastmechanismus gelangen und diesen verstellen kann.

Daher liegt der vorliegenden Anmeldung die Aufgabe zugrunde, eine Photovoltaikvorrichtung bereitzustellen, welche eine Installation der Photovoltaikvorrichtung, insbesondere auf einem Container transportierenden Fahrzeug, mit einem geringen Aufwand ermöglicht und vorzugsweise gleichzeitig einen höheren Wirkungsgrad bereitstellt.

Die Aufgabe wird gemäß einem ersten Aspekt der Anmeldung durch eine Photovoltaikvorrichtung für mindestens einen Container, insbesondere einen ISO-Container, gemäß Anspruch 1 gelöst. Die Photovoltaikvorrichtung umfasst mindestens ein rechteckförmiges Rahmengestell, eingerichtet zum Halten von mindestens einem Photovoltaikmodul. Das Rahmengestell weist mindestens eine Eckeinrichtung, umfassend ein erstes zu einem Befestigungsbeschlag des Containers korrespondierendes Befestigungsmodul, auf. Das mindestens eine Photovoltaikmodul ist in dem Rahmengestell gehalten, derart, dass das Photovoltaikmodul um eine erste Schwenkachse drehbar ist. Das mindestens eine Photovoltaikmodul ist in dem Rahmengestell gehalten, derart, dass das Photovoltaikmodul um eine erste Schwenkachse und eine zweite Schwenkachse drehbar ist, wobei die erste Schwenkachse zu der zweiten Schwenkachse rechtwinklig angeordnet ist. Ein Aktor ist vorgesehen, um das mindestens eine Photovoltaikmodul zu verdrehen, wobei die Ansteuerung abhängig von der augenblicklichen Ausrichtung der Oberfläche des mindestens einen Photovoltaikmoduls in Bezug zur Lichtquelle erfolgt

Indem im Gegensatz zum Stand der Technik anmeldungsgemäß eine Photovoltaikvorrichtung mit einem Rahmengestell bereitgestellt wird, in das mindestens ein (starres) Photovoltaikmodul (auch Photovoltaikpanel genannt) integriert ist, und dieses Rahmengestell so konfiguriert ist, dass es auf einen Container, als dem Containerdach, angeordnet werden kann, wird der (elektrische) Wirkungsgrad der Photovoltaikvorrichtung erhöht. Zudem ist durch das anmeldungsgemäße Befestigungsmodul, welches zu einem Befestigungsbeschlag des Containers korrespondiert, eine effizientere Installation der Photovoltaikvorrichtung auf einem Container möglich. Gleichzeitig ist hierdurch eine besonders sichere (mechanische) Kopplung zwischen dem Container und der Photovoltaikvorrichtung möglich. Insbesondere kann bei einem Container transportierenden Fahrzeug (z.B. Wasserfahrzeug, Schienenfahrzeug, Straßenfahrzeug) in einfacher Weise die oberste Containerschicht mit entsprechenden Photovoltaikvorrichtungen versehen werden.

Die Photovoltaikvorrichtung umfasst ein rechteckförmiges Rahmengestell. Das Rahmengestell umfasst vier Eckeinrichtungen. Jeweils zwei Eckeinrichtungen sind über mindestens ein (stabförmiges) Verbindungselement miteinander verbunden und bilden eine Seitenkante (z.B. Längskante bzw. -seite oder Breitekanten bzw. -seite). Mit anderen Worten ist eine erste Längsseite des Rahmengestells durch mindestens ein Verbindungselement gebildet und die zweite Längsseite des Rahmengestells durch mindestens ein weiteres Verbindungselement gebildet. In entsprechender Weise können die Breitseiten gebildet sein. Es versteht sich, dass zwei Eckeinrichtungen über zwei oder mehr Verbindungselemente verbunden sein können. Die Dimensionen der Seiten können insbesondere zu den entsprechenden Dimensionen der Breite- und Längsseiten eines Containers, insbesondere eines ISO-Containers, korrespondieren (insbesondere sind sie im Wesentlichen identisch).

Mindestens eine der Eckeinrichtungen des Rahmengestells, vorzugsweise sämtliche Eckeinrichtungen des Rahmengestells, weist/en ein erstes Befestigungsmodul auf. Das mindestens eine erste Befestigungsmodul ist derart konfiguriert, dass es zu mindestens einem Befestigungsbeschlag des Containers, insbesondere einem Befestigungsbeschlag einer Containerecke, korrespondiert. Unter korrespondiert ist hier insbesondere zu verstehen, dass das erste Befestigungsmodul und der Befestigungsbeschlag des Containers derart zusammenwirken, dass zumindest eine formschlüssige Verbindung zwischen Container und Photovoltaikvorrichtung bzw. dem ersten Befestigungsmodul und dem Befestigungsbeschlag hergestellt werden kann.

Vorzugsweise kann das erste Befestigungsmodul ein Twistlock-Befestigungsmodul sein. Ein Twistlock-Befestigungsmodul kann in einen (genormten) Befestigungsbeschlag, insbesondere Eckbeschlag, eines Containers eingesetzt werden. Zur Verriegelung kann ein Verriegelungsteil des Twistlock-Befestigungsmoduls verdreht werden. Hierdurch kann eine formschlüssige Verbindung hergestellt werden.

Gemäß einer ersten Ausführungsform der anmeldungsgemäßen Photovoltaikvorrichtung kann die mindestens eine Eckeinrichtung einen ersten, das erste Befestigungsmodul aufweisenden Endbereich umfassen. Der erste Endbereich kann in einem Installationszustand der Photovoltaikvorrichtung, also einem Zustand, in dem die Photovoltaikvorrichtung mechanisch mit dem Container gekoppelt ist, in Richtung des Containers weisen und diesen insbesondere kontaktieren. Dieser (untere) Endbereich umfasst das erste Befestigungsmodul. Die mindestens eine Eckeinrichtung kann einen zweiten Endbereich umfassen. Der zweite Endbereich kann dem ersten Endbereich gegenüberliegen. In dem Installationszustand kann der zweite (obere) Endbereich von dem Container wegweisen. Der zweite Endbereich kann ein zweites Befestigungsmodul aufweisen. Das zweite Befestigungsmodul kann insbesondere ein Befestigungsbeschlag sein, der einem (normierten) Befestigungsbeschlag des Containers entspricht.

Insbesondere können sämtliche Eckeinrichtungen des rechteckförmigen Rahmengestells jeweils zwei gegenüberliegende Endbereiche (die durch einen Steg getrennt sein können) mit je einem ersten Befestigungsmodul und einem zweiten Befestigungsmodul aufweisen. Dies führt zu einer Stapelbarkeit von Photovoltaikvorrichtungen. Für eine Lagerung der Photovoltaikvorrichtungen können eine Mehrzahl von Photovoltaikvorrichtungen übereinander gestapelt werden, da die ersten Befestigungsmodule einer Photovoltaikvorrichtung zu den zweiten Befestigungsmodulen einer (anderen) Photovoltaikvorrichtung korrespondieren. Zudem kann eine Photovoltaikvorrichtung durch entsprechend gebildete Eckeinrichtungen, umfassend je ein zweites Befestigungsmodul, mit geringem Aufwand transportiert bzw. bewegt werden und beispielswese von einer Kraneinrichtung auf einem Container positioniert werden. Insbesondere kann das (ohnehin vorhandene) (Iso-)Containergeschirr hierbei verwendet werden.

Die Photovoltaikvorrichtung, insbesondere das Rahmengestell, kann grundsätzlich aus jedem Material gebildet sein, welches die Herstellung eines geeigneten Rahmengestells ermöglicht. Vorzugsweise kann das Rahmengestell zumindest teilweise aus einem Metall, insbesondere Aluminium oder Stahl, gebildet sein.

In einem Beispiel kann das mindestens eine Photovoltaikmodul einer Photovoltaikvorrichtung in dem Rahmengestell fest und insbesondere unbeweglich installiert sein. Dies ermöglicht eine einfache und gleichzeitig besonders robuste Integration des mindestens einen Photovoltaikmoduls in dem Rahmengestell. Um den (elektrischen) Wirkungsgrad zu erhöhen, kann gemäß einer bevorzugten Ausführungsform der anmeldungsgemäßen Photovoltaikvorrichtung vorgesehen sein, dass das mindestens eine Photovoltaikmodul in dem Rahmengestell gehalten ist, derart, dass das Photovoltaikmodul um mindestens eine erste Achse, vorzugsweise um eine erste Achse und eine zweite Achse, drehbar ist. Indem das Photovoltaikmodul drehbar um mindestens eine Achse gehalten ist, kann das Photovoltaikmodul besser in Bezug zu einer Lichtquelle (z.B. Sonne) ausgerichtet werden. Energieertrag kann hierdurch verbessert werden.

Insbesondere kann vorgesehen sein, dass das mindestens eine Photovoltaikmodul um zwei Freiheitsgrade rotierbar ist. Eine erste Achse ist zu einer zweiten Achse im Wesentlichen rechtwinklig angeordnet. Die Achsen können sich insbesondere im Mittelpunkt des Photovoltaikmoduls schneiden. Ein Aktor (z.B. ein ansteuerbarer Motor) ist vorgesehen, um das mindestens eine Photovoltaikmodul zu verdrehen. Die Ansteuerung erfolgt abhängig von der augenblicklichen Ausrichtung der Oberfläche des mindestens einen Photovoltaikmoduls in Bezug zur Lichtquelle.

Darüber hinaus kann die Photovoltaikvorrichtung gemäß einer weiteren Ausführungsform mindestens einen, in dem Rahmengestell zumindest teilweise integrierten elektrischen Anschluss aufweisen. Der mindestens eine elektrische Anschluss (z.B. in Form eines Steckers oder einer Steckdose) kann zum elektrischen Koppeln mit einem weiteren elektrischen Anschluss eingerichtet sein. Die elektrische Kopplung bzw. Verbindung zwischen diesen elektrischen Anschlüssen kann direkt oder über mindestens eine Verbindungsleitung (z.B. Kabel oder dergleichen) erfolgen. Der weitere elektrische Anschluss kann beispielsweise ein elektrischer Anschluss einer weiteren Photovoltaikvorrichtung oder ein elektrischer Anschluss eines anderen Stromnetzes (z.B. Bordnetz eines Fahrzeugs, öffentliches Stromnetz, etc.) sein.

Der elektrische Anschluss kann zumindest eine durch das Rahmengestell geführte elektrische Leitung zu dem mindestens einen Photovoltaikmodul aufweisen. Hierdurch kann der durch die Umwandlung der empfangenen Lichtenergie erzeugte Strom von dem mindestens einen, insbesondere jedem Photovoltaikmodul der Photovoltaikvorrichtung zu dem elektrischen Anschluss fließen. Eine vor äußeren Einflüssen geschützte elektrische Verkabelung kann bereitgestellt werden.

Gemäß einer bevorzugten weiteren Ausführungsform kann die Photovoltaikvorrichtung mindestens eine Wechselrichtereinrichtung, insbesondere einen Photovoltaikwechselrichter, aufweisen. Die Wechselrichtereinrichtung kann eingerichtet sein, den von dem mindestens einen Photovoltaikmodul der Photovoltaikvorrichtung erzeigten elektrischen Strom derart zu verarbeiten, dass dieser in ein, mit einem elektrischen (Ausgangs-)Anschluss der Wechselrichtereinrichtung verbindbares Stromnetz (z.B. Bordnetz eines Fahrzeugs, öffentliches Stromnetz, etc.) gespeist werden kann. Hierzu kann insbesondere mindestens eine elektrische Leitung zwischen dem mindestens einen Photovoltaikmodul und der Wechselrichtereinrichtung vorgesehen sein. Die Leitung kann innerhalb des Rahmengestells geführt sein. Vorzugsweise kann die Wechselrichtereinrichtung eingerichtet sein, den von zwei oder mehr Photovoltaikvorrichtungen bzw. den entsprechenden Photovoltaikmodulen dieser Photovoltaikvorrichtungen erzeugten elektrischen Strom zu verarbeiten. Beispielsweise kann eine Mehrzahl von Photovoltaikvorrichtungen über die zuvor beschriebenen elektrischen Anschlüsse elektrisch miteinander gekoppelt sein. Hierdurch kann insbesondere der Strom mindestens einer zweiten Photovoltaikvorrichtung zu der ersten Photovoltaikvorrichtung und der Wechselrichtereinrichtung der ersten Photovoltaikvorrichtung fließen.

Vorzugsweise kann die Wechselrichtereinrichtung über ein Gehäuse verfügen, welches an dem Rahmengestell mechanisch befestigt sein kann. Auch kann eine Wechselrichtereinrichtung in dem Rahmengestell integriert sein.

Ein weiterer Aspekt der Anmeldung ist ein Photovoltaiksystem. Das Photovoltaiksystem umfasst mindestens eine zuvor beschriebene Photovoltaikvorrichtung. Das Photovoltaiksystem umfasst mindestens eine mit dem mindestens einen Photovoltaikmodul elektrisch verbindbare Wechselrichtereinrichtung.

Beispielsweise kann die Wechselrichtereinrichtung (an Bord eines Fahrzeugs oder einer Containerlagerstätte) an einem elektrischen Anschlussort, an dem mindestens eine zuvor angeordnete Photovoltaikvorrichtung anschließbar ist, positioniert sein. Mit anderen Worten kann ein Fahrzeug, eine Containerlagerstätte oder dergleichen über eine permanent installierte Wechselrichtereinrichtung verfügen. Bei dieser Ausführungsform kann auf eine Photovoltaikvorrichtung mit eigener Wechselrichtereinrichtung verzichtet werden.

Gemäß einer ersten Ausführungsform des anmeldungsgemäßen Photovoltaiksystems kann das Photovoltaiksystem mindestens eine Speichereinrichtung, eingerichtet zum Speichern der durch das mindestens eine Photovoltaikmodul erzeugten elektrischen Energie, umfassen. Beispielsweise kann eine Batterie oder dergleichen vorgesehen sein.

Gemäß einer besonders bevorzugten Ausführungsform kann mindestens eine Photovoltaikvorrichtung als eine erste Photovoltaikvorrichtung, umfassend mindestens die Wechselrichtereinrichtung, vorgesehen sein (wie beispielsweise zuvor beschrieben wurde). Ferner kann mindestens eine zweite, mit der mindestens einen ersten Photovoltaikvorrichtung zumindest elektrisch koppelbare bzw. verbindbare Photovoltaikvorrichtung vorgesehen sein. Nur die mindestens eine erste Photovoltaikvorrichtung kann bei dieser Ausführungsform eine Wechselrichtereinrichtung aufweisen. Die mindestens eine zweite Photovoltaikvorrichtung, insbesondere eine Mehrzahl von zweiten Photovoltaikvorrichtungen, können in dieser Ausführungsform des Systems keine eigenen Wechselrichtereinrichtungen aufweisen. Anstelle einer eigenen Wechselrichtereinrichtung kann eine zweite Photovoltaikvorrichtung die mindestens eine Wechselrichtereinrichtung der ersten Photovoltaikvorrichtung nutzen.

Ein noch weiterer Gegenstand der Anmeldung ist eine Verwendung einer zuvor beschriebenen Photovoltaikvorrichtung für die Anordnung, insbesondere Installierung, auf einem Container. Insbesondere kann eine Photovoltaikvorrichtung für die Befestigung auf einem Containerdach verwendet werden. Bei einer Mehrzahl von insbesondere benachbart zueinander angeordneten Containern kann insbesondere das zuvor beschriebene Photovoltaiksystem für die Anordnung auf den Containern verwendet werden. Insbesondere kann die oberste Containerschicht eines Fahrzeugs, insbesondere eines Containerschiffs, mit einem entsprechenden Photovoltaiksystem ausgestattet werden.

Die Merkmale der Photovoltaikvorrichtungen, Photovoltaiksystemen und Verwendungen sind frei miteinander kombinierbar. Insbesondere können Merkmale der Beschreibung und/oder der abhängigen Ansprüche, auch unter vollständiger oder teilweiser Umgehung von Merkmalen der unabhängigen Ansprüche, in Alleinstellung oder frei miteinander kombiniert, eigenständig erfinderisch sein.

Es gibt nun eine Vielzahl von Möglichkeiten, die anmeldungsgemäße Photovoltaikvorrichtung, das anmeldungsgemäße Photovoltaiksystem und die anmeldungsgemäße Verwendung auszugestalten und weiterzuentwickeln. Hierzu sei einerseits verwiesen auf die den unabhängigen Ansprüchen nachgeordneten Ansprüche, andererseits auf die Beschreibung von Ausführungsbeispielen in Verbindung mit der Zeichnung. In der Zeichnung zeigt:
- Fig. 1: eine schematische Ansicht eines nicht unter den Anspruch 1 fallenden Beispiels einer Photovoltaikvorrichtung gemäß der vorliegenden Anmeldung,
- Fig. 2: eine schematische Ansicht eines weiteren nicht unter den Anspruch 1 fallenden Beispiels einer Photovoltaikvorrichtung gemäß der vorliegenden Anmeldung,
- Fig. 3: eine schematische Ansicht eines Ausführungsbeispiels einer Photovoltaikvorrichtung gemäß der vorliegenden Anmeldung,
- Fig. 4: eine schematische Ansicht, insbesondere Draufsicht, eines Ausführungsbeispiels eines Photovoltaiksystems gemäß der vorliegenden Anmeldung, und
- Fig. 5: eine schematische Ansicht eines weiteren Ausführungsbeispiels einer Photovoltaikvorrichtung gemäß der vorliegenden Anmeldung in einem Installationszustand.

Nachfolgend werden für gleiche Elemente gleiche Bezugszeichen verwendet.

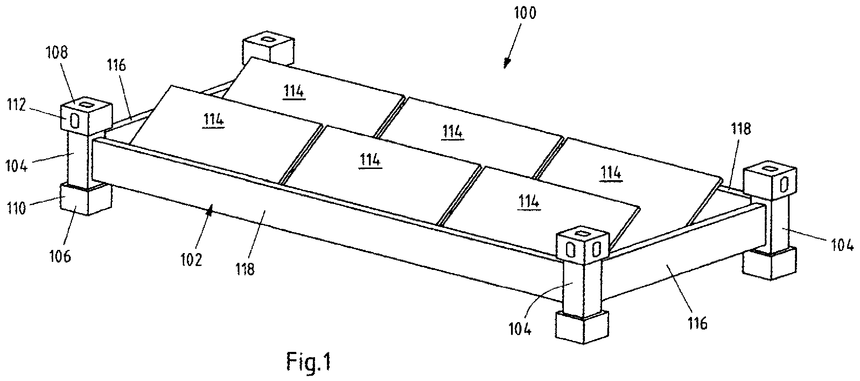

Figur 1 zeigt eine schematische Ansicht eines nicht unter den Anspruch 1 fallenden Beispiels einer Photovoltaikvorrichtung 100 gemäß der vorliegenden Anmeldung. Die Photovoltaikvorrichtung 100 weist ein insbesondere rechteckförmig (basierend auf einer Draufsicht) gebildetes Rahmengestell 102 auf. Die beiden Längsseiten des Rahmengestells 102 können durch stabförmige und/oder lattenförmige Elemente 118 gebildet sein. Die Breitseiten des Rahmengestells 102 können (auch) durch stabförmige und/oder lattenförmige Elemente 116 gebildet sein. Die jeweiligen Verbindungselemente 116, 118 können jeweils durch Eckeinrichtungen 104 des Rahmengestells 102 (mechanisch) miteinander verbunden sein. Bevorzugt können die Eckeinrichtungen 104 und/oder die Verbindungselemente 116, 118 aus einem Metall hergestellt sein.

Im vorliegenden Beispiel weist eine Eckeinrichtung 104 zwei gegenüberliegende Enden 106 und 108 bzw. Endbereiche 106 und 108 auf, die über ein stegförmiges Element miteinander verbunden sein können. Zumindest eines der Enden 106 und 108, vorliegend das erste Ende 106 und das zweite Ende 108, weisen (je) ein Befestigungsmodul 110, 112 auf. Der erste Endbereich weist ein erstes Befestigungsmodul 110 auf. Das erste Befestigungsmodul 110 korrespondiert hierbei zu einem Befestigungsbeschlag (insbesondere Eckbeschlag) eines Containers, insbesondere eines ISO-Containers.

Das erste Befestigungsmodul 110 kann insbesondere ein Twistlock-Befestigungsmodul 110 sein. Ein Twistlock-Befestigungsmodul 110 kann in einen (genormten) Eckbeschlag eines Containers eingesetzt werden. Dann kann zur Verriegelung ein Teil des Twistlock-Befestigungsmoduls 110 verdreht, insbesondere um 90° verdreht werden. Hierdurch kann eine formschlüssige Verbindung hergestellt werden.

Das zweite Befestigungsmodul 112 kann insbesondere in Form eines Befestigungsbeschlags 112 gebildet sein. Insbesondere kann dieser Befestigungsbeschlag 112 der Photovoltaikvorrichtung 100 entsprechend einem (genormten) Befestigungsbeschlag eines Containers gebildet sein. Dies ermöglicht zum einen eine sichere Stapelung von mehreren Photovoltaikvorrichtungen 100 übereinander. Zum anderen kann eine entsprechende Photovoltaikvorrichtung 100 von einer Kranvorrichtung mit einem Containergeschirr, insbesondere ISO-Containergeschirr, transportiert, also angehoben und auf einen Container gesetzt, werden.

Es sei angemerkt, dass jede der vier Eckeinrichtungen 104 jeweils zumindest ein erstes Befestigungsmodul 110, insbesondere jedoch auch das zweite Befestigungsmodul 112, aufweisen kann. Vorzugsweise kann jede Eckeinrichtung 104 gleich gebildet sein.

Vorliegend ist das rechteckförmige Rahmengestell 102 zum Halten einer Mehrzahl von Photovoltaikmodulen 114 eingerichtet. Zur Erzeugung der elektrischen Energie, also zur Umwandlung der Lichtenergie (meist Sonnenlicht) in elektrische Energie, werden Solarzellen verwendet. Die Leistung einer einzelnen Solarzelle ist relativ gering. Bei Zellen aus Silizium liegt diese typischerweise in einer Größenordnung von 5 Watt (peak). Um größere Leistungen zu erzielen, werden mehrere Solarzellen in der Regel zu Photovoltaikmodulen 114 weiterverarbeitet. Diese Photovoltaikmodule 114 stellen allgemein die "kleinsten" Bauelemente von Photovoltaikvorrichtungen 100 dar. Die Photovoltaikmodule 114 sind hierbei (nahezu) nicht verformbar.

Insbesondere ist im vorliegenden Ausführungsbeispiel vorgesehen, dass die Photovoltaikmodule 114 mit einem fest voreingestellten (unveränderbaren) Neigungswinkel gehalten sind.

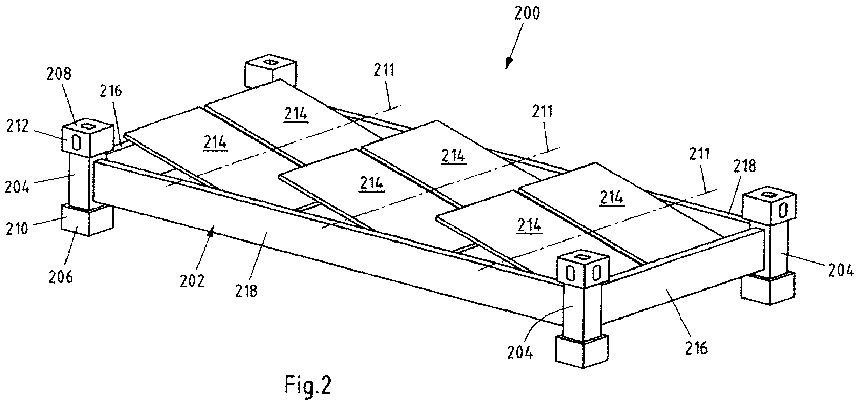

Figur 2 zeigt eine schematische Ansicht eines weiteren nicht unter den Anspruch 1 fallenden Beispiels einer Photovoltaikvorrichtung 200 gemäß der vorliegenden Anmeldung. Zur Vermeidung von Wiederholungen werden nachfolgend im Wesentlichen nur die Unterschiede zu dem Ausführungsbeispiel nach Figur 1 beschrieben. Für die anderen Komponenten der Photovoltaikvorrichtung 200 wird ansonsten auf die obigen Ausführungen verwiesen.

In dem vorliegenden Beispiel sind die Photovoltaikmodule 214 um eine erste (Schwenk-)Achse 211 drehbar gehalten. Dies ermöglicht eine verbesserte Ausrichtung zur Lichtquelle (z.B. Sonne). Die Drehung des mindestens einen Photovoltaikmoduls 214 kann manuell erfolgen.

Vorzugsweise kann ein (nicht gezeigter) Aktor in Form eines Motors vorgesehen sein, um eine Drehung der Photovoltaikmodule 214 zu bewirken. Die Steuersignale für einen Motor können beispielsweise auf Basis der augenblicklichen Lage der Lichtquelle in Relation zu der Oberfläche der Photovoltaikmodule 214 generiert werden. Entsprechende Steuer- und Detektionsmittel können für eine automatische Steuerung vorgesehen sein. Hierbei kann beispielsweise ein drahtloses Kommunikationsnetz verwendet werden.

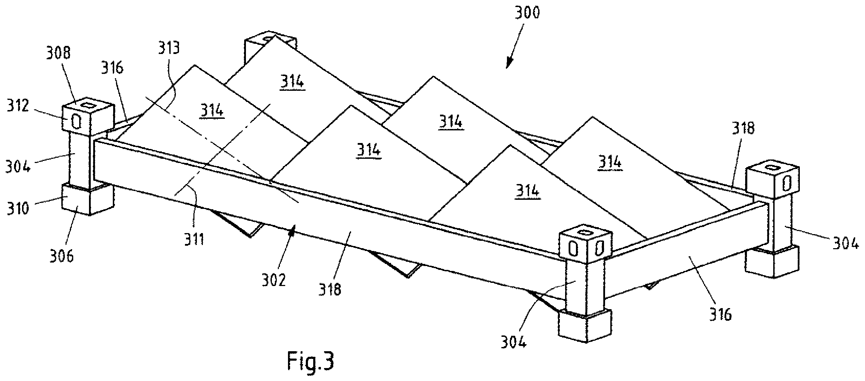

Figur 3 zeigt eine schematische Ansicht eines Ausführungsbeispiels einer Photovoltaikvorrichtung 300 gemäß der vorliegenden Anmeldung. Zur Vermeidung von Wiederholungen werden nachfolgend im Wesentlichen nur die Unterschiede zu den vorherigen Ausführungsbeispielen beschrieben. Für die anderen Komponenten der Photovoltaikvorrichtung 300 wird auf die obigen Ausführungen verwiesen.

In dem vorliegenden Ausführungsbeispiel sind die Photovoltaikmodule 314 um eine erste (Schwenk-)Achse 311 und um eine zweite (Schwenk-)Achse 313 drehbar gehalten. Die zweite (Schwenk-)Achse 313 kann zu der ersten (Schwenk-)Achse 311 rechtwinklig angeordnet sein. Insbesondere können sich die (Schwenk-)Achsen 311, 313 in einem Mittelpunkt eines Photovoltaikmoduls 314 schneiden. Indem die Photovoltaikmodule 314 um zwei Freiheitsgrade drehbar oder schwenkbar sind, kann die Ausrichtung zu der Lichtquelle noch weiter verbessert werden. Hierbei können die Photovoltaikmodule 314 bewegt werden, wie es zuvor beschrieben worden ist.

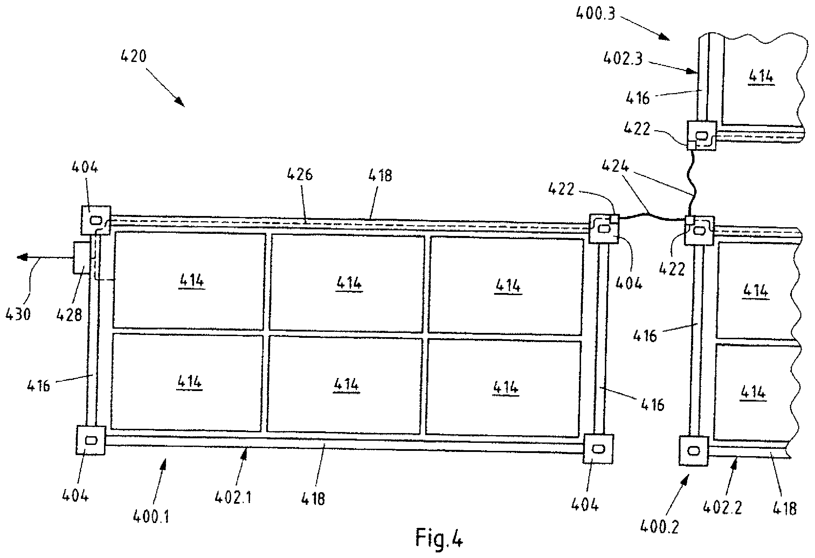

Die Figur 4 zeigt eine schematische Draufsicht eines Ausführungsbeispiels eines Photovoltaiksystems 420 gemäß der vorliegenden Anmeldung. Im vorliegenden Ausführungsbeispiel umfasst das Photovoltaiksystem 420 eine Mehrzahl von Photovoltaikvorrichtungen 400.1, 400.2, 400.3 und mindestens eine Wechselrichtereinrichtung 428. Es versteht sich, dass gemäß anderen Varianten der Anmeldung auch nur eine Photovoltaikvorrichtung vorgesehen sein kann.

Die Photovoltaikvorrichtungen 400.1, 400.2, 400.3 können ähnlich den zuvor beschriebenen Photovoltaikvorrichtungen 100, 200 oder 300 gebildet sein. Im Unterschied zu diesen Photovoltaikvorrichtungen 100, 200 oder 300 weist die dargestellte erste Photovoltaikvorrichtung 400.1 die Wechselrichtereinrichtung 428 auf. Vorliegend ist die Wechselrichtereinrichtung 428 an dem Rahmengestell 402.1 der ersten Photovoltaikvorrichtung 400.1 befestigt. Insbesondere ist unter einer ersten Photovoltaikvorrichtung 400.1 eine Photovoltaikvorrichtung 400.1 mit einer (eigenen) Wechselrichtereinrichtung 428 zu verstehen. Auch kann gemäß anderen Varianten vorgesehen sein, dass eine Wechselrichtereinrichtung in einem Rahmengestell integriert ist oder als separates Modul entfernt von (jeder) Photovoltaikvorrichtung angeordnet ist.

Bei der Wechselrichtereinrichtung 428 kann sich an der Eingangsseite mindestens ein Gleichstromsteller befinden, der von einem Mikroprozessor gesteuert werden kann. Auf der Ausgangsseite kann sich vorzugsweise ein ein- bis dreiphasiger Wechselrichter befinden, der sich automatisch mit dem angeschlossenen Stromnetz (durch das Bezugszeichen 430 angedeutet) synchronisiert.

Neben der einen ersten Photovoltaikvorrichtung 400.1, umfassend die Wechselrichtereinrichtung 428, umfasst das dargestellte bevorzugte Photovoltaiksystem eine Mehrzahl von zweiten Photovoltaikvorrichtungen 400.2, 400.3. Unter einer zweiten Photovoltaikvorrichtung 400.2, 400.3 ist vorliegend insbesondere eine Photovoltaikvorrichtung ohne Wechselrichtereinrichtung zu verstehen.

Die zweiten Photovoltaikvorrichtung 400.2, 400.3 sind unmittelbar miteinander und/oder mit der ersten Photovoltaikvorrichtung 400.1 über (genormte) elektrische Anschlüsse 422 miteinander elektrisch verbindbar. Beispielsweise kann ein (genormtes) Kabel 424 zum Verbinden zweier elektrischer Anschlüsse 422 eingesetzt werden. Andere elektrische Verbindungsmittel können vorgesehen sein.

Im vorliegenden Ausführungsbeispiel ist mindestens ein elektrischer Anschluss 422 einer Photovoltaikvorrichtung 400 in einer Eckeinrichtung 404 angeordnet, insbesondere integriert. Vorzugsweise können insbesondere in jeder Eckeinrichtung 404 eines Rahmengestells 402 zumindest zwei rechtwinklig zueinander angeordnete elektrische Anschlüsse 422 angeordnet sein. Hierdurch ist insbesondere eine einfache und beliebig variable Kopplung von Photovoltaikvorrichtungen 400 möglich. Es versteht sich, dass gemäß anderen Varianten der Anmeldung ein elektrischer Anschluss einer Photovoltaikvorrichtung auch an einer anderen Position der Photovoltaikvorrichtung angeordnet sein kann.

Um die erzeugte elektrische Energie in ein ankoppelbares Stromnetz (über die Wechselrichtereinrichtung 428) einzuspeisen, sind elektrische Leitungen 426 vorgesehen. In dem vorliegenden Ausführungsbeispiel sind die Leitungen 426 in dem Rahmengestell 402, insbesondere in den jeweils stabförmigen Elementen 416, 418, (vollständig) integriert. Mittels der elektrischen Leitungen 426 (und der Anschlüsse 422 und/oder Verbindungskabel 424) kann Strom von den jeweiligen Photovoltaikmodulen 414 (die nur teilweise schematisch angedeutet sind) zu der Wechselrichtereinrichtung 428 fließen. Die Wechselrichtereinrichtung 428 kann dann den Strom in ein Stromnetz 430 einspeisen.

Insbesondere ist vorliegend nur eine erste Photovoltaikvorrichtung 400.1 mit einer Wechselrichtereinrichtung 428 angeordnet, wobei eine Mehrzahl von zweiten Photovoltaikvorrichtungen 400.2, 400.3 (ohne eigene Wechselrichtereinrichtung) direkt oder indirekt (über weitere zweite Photovoltaikvorrichtungen 402.3) mit dieser ersten Photovoltaikvorrichtung 400.1 elektrisch gekoppelt sind.

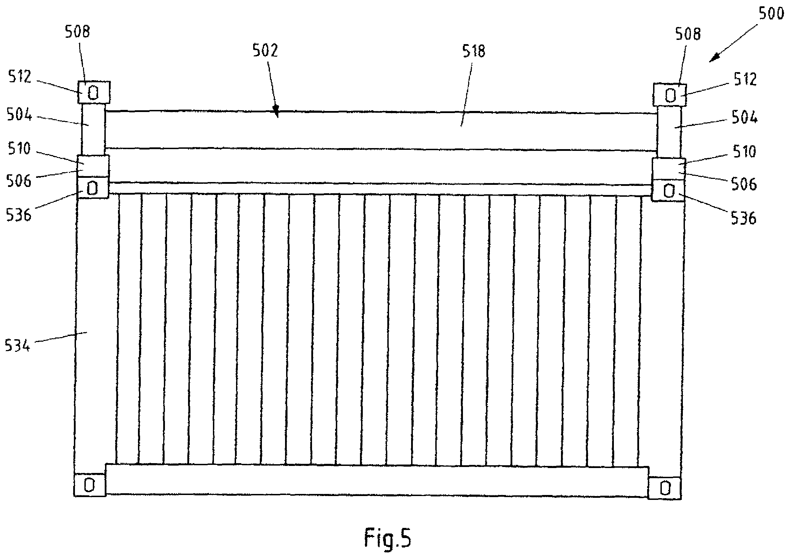

Figur 5 zeigt eine schematische Ansicht eines weiteren Ausführungsbeispiels einer Photovoltaikvorrichtung 500 in einem (zumindest mechanischen) Installationszustand der Photovoltaikvorrichtung 500. Zur Vermeidung von Wiederholungen werden nachfolgend im Wesentlichen nur die Unterschiede zu den vorherigen Ausführungsbeispielen beschrieben. Für die anderen Komponenten der Photovoltaikvorrichtung 500 wird auf die obigen Ausführungen verwiesen.

Wie zu erkennen ist, ist das jeweilige erste Befestigungsmodul 510 einer Eckeinrichtung 504 des Rahmengestells 502 mit einem hierzu korrespondierenden Befestigungsmodul 536 eines Containers 534 gekoppelt. Das erste Befestigungsmodul 510 ist insbesondere ein Twistlock-Befestigungsmodul 110, welches vorliegend in einem (genormten) Eckbeschlag 536 des Containers 534 eingesetzt ist. Zur Verriegelung ist ein (nicht gezeigtes) Verrieglungsteil des Twistlock-Befestigungsmoduls 510 insbesondere um 90° verdreht. Hierdurch ist eine formschlüssige Verbindung zwischen der Photovoltaikvorrichtung 500 und dem Container 534 in dem vorliegenden Installationszustand gegeben.

Durch die anmeldungsgemäßen Gegenstände ist insbesondere die Nutzung der Sonnenenergie an Bord von Wasserfahrzeugen, insbesondere Containerschiffen, auf Containerlagerflächen, z. B. an einem Hafen, und/oder auf anderen Transportmitteln von (ISO-)Containern, wie Schienenfahrzeugen oder Lastkraftwagen, möglich. Die vorgeschlagene "Rahmenlösung" bietet insbesondere die Möglichkeit, starre und insbesondere dickere (z.B. mit einer Dicke von zumindest mehr als 100 mm) Solarzellen zu verwenden, die gegenüber flexiblen und dünnen (z.B. mit einer Dicke zwischen 0,1 mm und 10 mm) Solarteppichen höhere Wirkungsgrade aufweisen.

Darüber hinaus kann durch die anmeldungsgemäßen Gegenstände insbesondere die Be- und Entladevorgänge signifikant vereinfacht und beschleunigt werden. So kann eine aufwendige Rollung, Faltung und/oder Klappung von Solarteppichen sowie deren platzintensive (Zwischen-)Lagerung entfallen. Die vorgeschlagene Lösung mittels Rahmengestellen bietet insbesondere die Möglichkeit, die genormten Befestigungsmechanismen der ISO-Container, insbesondere die genormten Eckbeschlage und Twistlock, und/oder das am Hafen vorhandene ISO-Containergeschirr sowie die vorhandenen Containerlagerplätze, zu verwenden. Für eine effiziente Lagerung sind die Photovoltaikvorrichtung zudem vorzugsweise stapelbar ausgeführt.

Die Länge und Breite eines Rahmengestells entsprechen vorzugsweise jeweils den normierten Längen und Breiten der (verschiedenen) ISO-Container. Die erzeugte Solarenergie kann auf den Fahrzeugen, insbesondere den Wasserfahrzeugen, oder anderen ISO-Container-Transportmitteln, zur teilweisen Deckung des elektrischen Eigenbedarfs herangezogen werden (z.B. Einspeisung ins Bordnetz zur Entlastung der strom- und krafterzeugenden Aggregate). Containerschiffe verfügen in der Regel bereits über ein Stromnetz, um beispielsweise Kühlcontainer mit Strom zu versorgen. Vorzugsweise kann eine anmeldungsgemäße Photovoltaikvorrichtung, insbesondere die Wechselrichtereinrichtung einer ersten Photovoltaikvorrichtung (siehe z.B. Fig. 4), mit diesem (ohnehin) vorgesehenen Stromnetz gekoppelt werden. Durch diese Einspeisung können insbesondere Kraftstoffeinsparungen erzielt und infolgedessen Emissionen, z. B. Kohlenstoffdioxidemissionen, reduziert werden. Auf Containerlagerflächen, z. B. an einem Hafen, kann die erzeugte Solarenergie beispielsweise lokal genutzt oder in ein öffentliches Stromnetz eingespeist werden. Auch kann vorgesehen sein, dass nicht unmittelbar nutzbare Leistungsspitzen oder Überkapazitäten von erzeugter Solarenergie (für eine spätere Nutzung) in geeigneten Speichern (z.B. Batterie) (zwischen-)gespeichert werden können.

## Patentansprüche

1. Photovoltaikvorrichtung (300, 400, 500) für mindestens einen Container (534), umfassend:
- mindestens ein rechteckförmiges Rahmengestell (302, 402, 502), eingerichtet zum Halten von mindestens einem Photovoltaikmodul (314, 414, 514),
- wobei das Rahmengestell (302, 402, 502) mindestens eine Eckeinrichtung ( 304, 404, 504), umfassend ein erstes zu einem Befestigungsbeschlag (536) eines Containers (534) korrespondierendes Befestigungsmodul (310, 410, 510), aufweist,
- wobei das mindestens eine Photovoltaikmodul ( 314, 414, 514) in dem Rahmengestell ( 302, 402, 502) gehalten ist, derart, dass das Photovoltaikmodul ( 314, 414, 514) um eine erste Schwenkachse (311) drehbar ist,
**dadurch gekennzeichnet, dass**
- das mindestens eine Photovoltaikmodul ( 314, 414, 514) in dem Rahmengestell ( 302, 402, 502) gehalten ist, derart, dass das Photovoltaikmodul ( 314, 414, 514) um eine erste Schwenkachse (311) und eine zweite Schwenkachse (313) drehbar ist, wobei die erste Schwenkachse (311) zu der zweiten Schwenkachse (313) rechtwinklig angeordnet ist, und
- ein Aktor vorgesehen ist, um das mindestens eine Photovoltaikmodul ( 314, 414, 514) zu verdrehen, wobei die Ansteuerung abhängig von der augenblicklichen Ausrichtung der Oberfläche des mindestens einen Photovoltaikmoduls ( 314, 414, 514) in Bezug zur Lichtquelle erfolgt.

2. Photovoltaikvorrichtung ( 300, 400, 500) nach Anspruch 1, **dadurch**
**gekennzeichnet, dass**
- die Eckeinrichtung ( 304, 404, 504) einen ersten, das erste Befestigungsmodul ( 310, 410, 510) aufweisenden Endbereich (306, 406, 506) umfasst, und
- die Eckeinrichtung ( 304, 404, 504) einen zweiten, dem ersten Endbereich (306, 406, 506) gegenüberliegenden Endbereich (308, 408, 508) umfasst,
- wobei der zweite Endbereich (308, 408, 508) ein zweites Befestigungsmodul (312, 412, 512) aufweist.

3. Photovoltaikvorrichtung (300, 400, 500) nach Anspruch 1 oder 2,
**dadurch gekennzeichnet, dass** das Rahmengestell (302, 402, 502) aus
einem Metall, insbesondere Aluminium oder Stahl, gebildet ist.

4. Photovoltaikvorrichtung (300, 400, 500) nach einem der vorherigen Ansprüche, **dadurch gekennzeichnet, dass**
- die Photovoltaikvorrichtung (300, 400, 500) mindestens einen in dem Rahmengestell (302, 402, 502) zumindest teilweise integrierten elektrischen Anschluss (422), eingerichtet zum elektrischen Koppeln mit einem weiteren elektrischen Anschluss (422), umfasst,
- wobei insbesondere der elektrische Anschluss (422) zumindest eine durch das Rahmengestell ( 302, 402, 502) geführte elektrische Leitung (426) zu dem Photovoltaikmodul (314, 414, 514) aufweist.

5. Photovoltaikvorrichtung (300, 400, 500) nach einem der vorherigen Ansprüche, **dadurch gekennzeichnet, dass** die Photovoltaikvorrichtung (300, 400, 500) mindestens eine Wechselrichtereinrichtung (428) aufweist.

6. Photovoltaikvorrichtung (300, 400, 500) nach Anspruch 5, **dadurch gekennzeichnet, dass** die Wechselrichtereinrichtung (428) in dem Rahmengestell integriert ist.

7. Photovoltaiksystem (420), umfassend:
- mindestens eine erste Photovoltaikvorrichtung (300, 400, 500) nach einem der vorherigen Ansprüche, und
- mindestens eine zweite mit der mindestens einen ersten Photovoltaikvorrichtung (300, 400, 500) zumindest elektrisch verbindbare Photovoltaikvorrichtung (300, 400, 500).

8. Photovoltaiksystem (420) nach Anspruch 7, **dadurch gekennzeichnet, dass** das Photovoltaiksystem (420) mindestens eine Speichereinrichtung, eingerichtet zum Speichern der durch das mindestens eine Photovoltaikmodul (314, 414, 514) erzeugten elektrischen Energie, umfasst.

9. Photovoltaiksystem (420) nach Anspruch 7 oder 8, **dadurch gekennzeichnet, dass** nur die mindestens eine erste Photovoltaikvorrichtung eine Wechselrichtereinrichtung aufweist und die mindestens eine zweite Photovoltaikvorrichtung, insbesondere eine Mehrzahl von zweiten Photovoltaikvorrichtungen, keine eigenen Wechselrichtereinrichtungen aufweist.

10. Verwendung einer Photovoltaikvorrichtung ( 300, 400, 500) nach einem der vorherigen Ansprüche 1 bis 6 für die Anordnung auf einem Container (534).

## Claims

1. A photovoltaic device (300, 400, 500) for at least one container (534), comprising:
- at least one rectangular frame assembly (302, 402, 502) configured to support at least one photovoltaic module (314, 414, 514),
- wherein the frame assembly (302, 402, 502) comprises at least one piece of corner equipment (304, 404, 504) comprising a first fastening module (310, 410, 510) corresponding to a fastening fitting (536) of a container (534),
- wherein the at least one photovoltaic module (314, 414, 514) is held in the frame assembly (302, 402, 502) such that the photovoltaic module (314, 414, 514) can rotate about a first pivot axis (311),
**characterized in that**
- the at least one photovoltaic module (314, 414, 514) is held in the frame assembly (302, 402, 502) in such a way that the photovoltaic module (314, 414, 514) can rotate about a first pivot axis (311) and a second pivot axis (313), wherein the first pivot axis (311) is arranged at a right angle to the second pivot axis (313), and
- an actuator is provided to rotate the at least one photovoltaic module (314, 414, 514), wherein the controlling depends on the current orientation of the surface of the at least one photovoltaic module (314, 414, 514) relative to the light source .

2. The photovoltaic device (300, 400, 500) according to claim 1, **characterized in that**
- the corner equipment (304, 404, 504) comprises a first end region (306, 406, 506) having the first fastening module (310, 410, 510), and
- the corner equipment (304, 404, 504) comprises a second end region (308, 408, 508) opposite the first end region (306, 406, 506),
- wherein the second end region (308, 408, 508) comprises a second fastening module (312, 412, 512).

3. The photovoltaic device (300, 400, 500) according to claim 1 or 2, **characterized in that** the frame assembly (302, 402, 502) is made of a metal, in particular aluminum or steel.

4. The photovoltaic device (300, 400, 500) according to any one of the preceding claims, **characterized in that**
- the photovoltaic device (300, 400, 500) comprises at least one electrical terminal (422) that is at least partially integrated in the frame assembly (302, 402, 502) and is configured for electrical coupling with a further electrical terminal (422),
- wherein, in particular, the electrical terminal (422) comprises at least one electrical connection laid through the frame assembly (314, 414, 514) to the photovoltaic module (314, 414, 514).

5. The photovoltaic device (300, 400, 500) according to one of the preceding claims, **characterized in that** the photovoltaic device (300, 400, 500) comprises at least one inverter (428).

6. The photovoltaic device (300, 400, 500) according to claim 5, **characterized in that** the inverter unit (428) is integrated in the frame assembly.

7. A photovoltaic system (420) comprising:
- at least one first photovoltaic device (300, 400, 500) according to one of the preceding claims, and
- at least one second photovoltaic device (300, 400, 500) that can be connected, at least electrically, to the at least one first photovoltaic device (300, 400, 500).

8. The photovoltaic system (420) according to claim 7, **characterized in that** the photovoltaic system (420) comprises at least one storage device configured to store the electrical energy generated by the at least one photovoltaic module (314, 414, 514).

9. The photovoltaic system (420) according to claim 7 or 8, **characterized in that** only the at least one first photovoltaic device has an inverter**,** and the at least one second photovoltaic device, in particular, a plurality of second photovoltaic devices, does not have its own inverters.

10. Use of a photovoltaic device (300, 400, 500) according to any one of the preceding claims 1 through 6 for mounting on a container (534).

## Revendications

1. Dispositif photovoltaïque (300, 400, 500) pour au moins un conteneur (534), comprenant :
- au moins une structure de cadre rectangulaire (302, 402, 502), configurée pour tenir au moins un module photovoltaïque (314, 414, 514),
- où la structure de cadre (302, 402, 502) a au moins un dispositif d'angle (304, 404, 504), comprenant un premier module de fixation (310, 410, 510) correspondant à une ferrure de fixation (536) d'un conteneur (534),
- où l'au moins un module photovoltaïque (314, 414, 514) est tenu dans la structure de cadre (302, 402, 502), de telle sorte que le module photovoltaïque (314, 414, 514) est rotatif autour d'un premier axe de pivotement (311),
**caractérisé en ce que**
- l'au moins un module photovoltaïque (314, 414, 514) est tenu dans la structure de cadre (302, 402, 502), de telle sorte que le module photovoltaïque (314, 414, 514) est rotatif autour d'un premier axe de pivotement (311) et d'un deuxième axe de pivotement (313), où le premier axe de pivotement (311) est disposé perpendiculairement au deuxième axe de pivotement (313), et
- un actionneur est prévu pour faire tourner l'au moins un module photovoltaïque (314, 414, 514), où la commande est dépendante de l'orientation instantanée de la surface de l'au moins un module photovoltaïque (314, 414, 514) par rapport à la source lumineuse.

2. Dispositif photovoltaïque (300, 400, 500) selon la revendication 1, **caractérisé en ce que**
- le dispositif d'angle (304, 404, 504) comprend une première zone d'extrémité (306, 406, 506) ayant le premier module de fixation (310, 410, 510), et
- le dispositif d'angle (304, 404, 504) comprend une deuxième zone d'extrémité (308, 408, 508) opposée à la première zone d'extrémité (306, 406, 506),
- où la deuxième zone d'extrémité (308, 408, 508) a un deuxième module de fixation (312, 412, 512).

3. Dispositif photovoltaïque (300, 400, 500) selon la revendication 1 ou 2, **caractérisé en ce que** la structure de cadre (302, 402, 502) est formée d'un métal, en particulier d'aluminium ou d'acier.

4. Dispositif photovoltaïque (300, 400, 500) selon l'une des revendications précédentes, **caractérisé en ce que**
- le dispositif photovoltaïque (300, 400, 500) comprend au moins une connexion électrique (422) au moins partiellement intégrée dans la structure de cadre (302, 402, 502), configurée pour coupler électriquement avec une autre connexion électrique (422),
- où en particulier la connexion électrique (422) a au moins une à travers la structure de cadre (314, 414, 514).

5. Dispositif photovoltaïque (300, 400, 500) selon l'une des revendications précédentes, **caractérisé en ce que** le dispositif photovoltaïque (300, 400, 500) a au moins un dispositif onduleur (428).

6. Dispositif photovoltaïque (300, 400, 500) selon la revendication 5, **caractérisé en ce que** le dispositif onduleur (428) est intégré dans la structure de cadre.

7. Système photovoltaïque (420), comprenant :
- au moins un premier dispositif photovoltaïque (300, 400, 500) selon l'une des revendications précédentes, et
- au moins un deuxième dispositif photovoltaïque (300, 400, 500) au moins électriquement connectable à l'un ou plusieurs premiers dispositifs photovoltaïques (300, 400, 500).

8. Système photovoltaïque (420) selon la revendication 7, **caractérisé en ce que** le système photovoltaïque (420) comprend au moins un dispositif de stockage, configuré pour stocker l'énergie électrique générée par l'au moins un module photovoltaïque (314, 414, 514).

9. Système photovoltaïque (420) selon la revendication 7 ou 8, **caractérisé en ce que** seul l'au moins un premier dispositif photovoltaïque a un dispositif onduleur et l'au moins un deuxième dispositif photovoltaïque , en particulier une pluralité de deuxièmes dispositifs photovoltaïques, n'a pas de dispositifs onduleurs propres.

10. Utilisation d'un dispositif photovoltaïque (300, 400, 500) selon l'une des revendications précédentes 1 à 6 pour la disposition sur un conteneur (534).
